# EUROPEAN PATENT APPLICATION

(11) **EP 4 811 108 A1**
(43) Date of publication of application: **23.09.2026**
(21) Application number: 24913564.1
(22) Date of filing: 04.12.2024
(51) Int. Cl.: G06F 3/16, G06N 20/00, H04L 12/28

(54) **ELECTRONIC DEVICE AND CONTROL METHOD THEREFOR**

(30) Priority: 29.12.2023 KR 20230196913
(71) Applicant: Samsung Electronics Co., Ltd., Suwon-si, Gyeonggi-do 16677 (KR)
(72) Inventor: PARK, Jihoon, Suwon-si, Gyeonggi-do 16677 (KR)
(74) Representative: HGF
(86) International application number: PCT/KR2024/019775
(87) International publication number: WO 2025/143621

(57) **Abstract**

An electronic device and a control method therefor are provided. The electronic device comprises a communication interface, a microphone, a memory for storing at least one instruction, and a processor connected to the communication interface, the microphone and the memory so as to control the electronic device, wherein the processor executes the at least one instruction so as to: acquire information about at least one external device related to user speech when the user speech for controlling the external device is input through the microphone; input information about the user speech into a large language model so as to acquire additional information related to the user speech when it is determined that the additional information necessary for performing an operation related to the user speech exists; acquire a prompt for controlling the at least one external device on the basis of the user speech and the additional information; input the prompt into the large language model so as to acquire a control command for controlling the at least one external device; and transmit the control command to the at least one external device through the communication interface.

## Description

### [Technical Field]

The present disclosure relates to an electronic apparatus and a control method therefor, and more particularly, to an electronic apparatus for controlling an external device connected to the electronic apparatus by using a large language model and a control method therefor.

### [Background Art]

A smart home Internet of Things (IoT) service may provide a home automation function for automatically operating a device connected to a smart home IoT server. A conventional home automation function may automatically execute a device operation set by a user when a device operation condition defined by the user is satisfied. Accordingly, for operating the conventional home automation function, a user is required to define and set, in detail for each device, specific operation conditions and contents regarding device operation for each device. As described above, the smart home IoT service may operate devices according to defined device operation contents when corresponding conditions are satisfied, based on operation conditions and device operation contents defined in detail by the user.

In a conventional home automation technology, as described above, a user is required to individually set operation conditions and also individually set device operation contents according to the set operation conditions, which results in inconvenience. For example, for setting a function for operating an air conditioner when the weather is hot, a user may be required to access a smart home IoT application and input a specific value indicating at what temperature the air conditioner is turned on and off. In addition, constructing home automation may involve a difficulty in additionally installing a sensor, which is a device for measuring an external condition. In addition, when a plurality of devices are required to be operated, specifying operation conditions and device operation contents for all of the plurality of devices may cause inconvenience.

### [Disclosure of Invention]

### [Solution to Problem]

According to an embodiment of the present disclosure, provided is an electronic apparatus including: a communication interface; a microphone; a memory for storing at least one instruction; and a processor connected to the communication interface, the microphone, and the memory and configured to control the electronic apparatus, wherein, by executing the at least one instruction, the processor is configured to: acquire information about at least one external device related to user speech when the user speech for controlling the external device is input through the microphone; acquire additional information related to the user speech when it is determined that the additional information required for performing an operation related to the user speech exists by inputting information about the user speech into a large language model; acquire a prompt for controlling the at least one external device based on the user speech and the additional information; acquire a control command for controlling the at least one external device by inputting the prompt into the large language model; and transmit the control command to the at least one external device through the communication interface.

The processor may be configured to: when the user speech is input, acquire list information including a plurality of external devices connected to a home Internet of Things (IoT) server through the home IoT server connected to the electronic apparatus; and acquire current state information of the plurality of external devices included in the list information.

The processor may be configured to: acquire a prompt for controlling the at least one external device based on current state information of the at least one external device among the plurality of external devices, the user speech, and the additional information.

The processor may be configured to: acquire a prompt template for generating the prompt; and acquire the prompt by inserting the information about the user speech and the additional information into the prompt template.

The processor may be configured to: acquire the additional information through at least one of the large language model, the Internet, and a user database when it is determined that the additional information required for performing an operation related to the user speech exists by inputting the information about the user speech into the large language model.

The additional information may include at least one of common sense information acquired through the large language model, external environment information related to the user speech searched through the Internet, and user history information related to the user speech searched through a user database.

The processor may be configured to: map the control command acquired through the large language model onto an application programming interface (API) related to a home IoT service and call the API.

The processor may be configured to: output a message guiding a user with information related to the control command.

According to an embodiment of the present disclosure, provided is a control method for an electronic apparatus, the method including: acquiring information about at least one external device related to user speech when the user speech for controlling the external device is input; acquiring additional information related to the user speech when it is determined that the additional information required for performing an operation related to the user speech exists by inputting information about the user speech into a large language model; acquiring a prompt for controlling the at least one external device based on the user speech and the additional information; acquiring a control command for controlling the at least one external device by inputting the prompt into the large language model; and transmitting the control command to the at least one external device.

The acquiring of the information about the at least one external device may include: when the user speech is input, acquiring list information including a plurality of external devices connected to a home Internet of Things (IoT) server through the home IoT server connected to the electronic apparatus; and acquiring current state information of the plurality of external devices included in the list information.

The acquiring of the prompt may include: acquiring a prompt for controlling the at least one external device based on current state information of the at least one external device among the plurality of external devices, the user speech, and the additional information.

The acquiring of the prompt may include: acquiring a prompt template for generating the prompt; and acquiring the prompt by inserting the information about the user speech and the additional information into the prompt template.

The acquiring of the additional information may include: acquiring the additional information through at least one of the large language model, the Internet, and a user database when it is determined that the additional information required for performing an operation related to the user speech exists by inputting the information about the user speech into the large language model.

The additional information may include at least one of common sense information acquired through the large language model, external environment information related to the user speech searched through the Internet, and user history information related to the user speech searched through the user database.

The method may further include: mapping the control command acquired through the large language model onto an application programming interface (API) related to a home IoT service and calling the API.

The method may include: outputting a message guiding a user with information related to the control command.

### [Brief Description of Drawings]

FIG. 1 is a diagram illustrating a home Internet of Things (IoT) system according to an embodiment of the present disclosure,
FIG. 2 is a block diagram illustrating a configuration of an electronic apparatus according to an embodiment of the present disclosure,
FIG. 3 is a block diagram illustrating components included in the electronic apparatus for performing a home automation function according to an embodiment of the present disclosure,
FIG. 4 is a diagram illustrating a method for performing a home automation function related to weather according to an embodiment of the present disclosure, and
FIG. 5 is a flowchart illustrating a control method for an electronic apparatus according to an embodiment of the present disclosure.

### [Mode for Invention]

The present disclosure may be variously modified and have various embodiments, and specific embodiments of the present disclosure are thus illustrated in the accompanying drawings and described in detail in the specification. However, it should be understood that the scope of the present disclosure is not limited to specific embodiments, and include various modifications, equivalents, and/or alternatives according to embodiments of the present disclosure. Throughout the drawings, similar components are denoted by similar reference numerals.

In describing the present disclosure, omitted is a detailed description of a case where it is decided that a detailed description of the known functions or configurations related to the present disclosure may unnecessarily obscure the gist of the present disclosure.

In addition, the following embodiment may be modified in several different forms, and the scope and spirit of the present disclosure are not limited to the following embodiments. Rather, these embodiments make the present disclosure thorough and complete, and are provided to completely convey the spirit of the present disclosure to those skilled in the art.

Terms used in the present disclosure are used only to describe specific embodiments and are not intended to limit the scope of the present disclosure. Singular expressions may include plural expressions unless the context clearly indicates otherwise.

In the present disclosure, the expression such as "have," "may have," "include," or "may include," indicates the presence of a corresponding feature (e.g., a numerical value, a function, an operation, or a component such as a part), and does not exclude the presence of an additional feature.

In the present disclosure, expressions such as "A or B," "at least one of A or/and B," or "one or more of A or/and B" may include all possible combinations of items enumerated together. For example, "A or B," "at least one of A and B," or "at least one of A or B" may indicate all of (1) including at least one A, (2) including at least one B, or (3) including both at least one A and at least one B.

In the present disclosure, expressions such as "first," "second," "firstly," or "secondly" may modify various components regardless of order and/or importance, and are used only to distinguish one component from another component, and do not limit the corresponding components.

When it is described that a component (e.g., a first component) is "(operatively or communicatively) coupled with/to" or "connected to" another component (e.g., a second component), it should be understood that the component may be directly connected to the other component or may be connected through another component (e.g., a third component).

On the other hand, when it is described that a component (e.g., a first component) is "directly connected to" or "directly coupled to" another component (e.g., a second component), it may be understood that no other component (e.g., a third component) is present between the component and the other component.

In the present disclosure, an expression "configured to (or set to)" may be replaced, depending on a context, with expressions such as "suitable for," "having the capacity for," "designed for," "adapted for," "made for," or "capable of." The term "configured to (or set to)" may not necessarily refer to only "specifically designed to" in terms of hardware.

Instead, in some cases, an expression "a device configured to" may refer to a device capable of "performing" a corresponding function in combination with another device or component. For example, a phrase "a processor configured to (or set to) perform A, B, and C" may refer to a dedicated processor (e.g., an embedded processor) capable of performing the corresponding operation, or a generic-purpose processor (e.g., a central processing unit (CPU) or an application processor) capable of performing the operation by executing one or more software programs stored in a memory device.

In an embodiment, a "module" or a "unit" may perform at least one function or operation, and may be implemented as hardware, software, or a combination of hardware and software. In addition, a plurality of "modules" or a plurality of "units" may be integrated into at least one module and implemented by at least one processor, except for a "module" or a "unit" that needs to be implemented as specific hardware.

Meanwhile, various elements and regions in the drawings are schematically illustrated. Accordingly, the spirit of the present disclosure is not limited by relative sizes or intervals illustrated in the drawings.

In the present disclosure, a "neural network model" may refer to an overall model implemented based on a neural network of a human brain, in which artificial neurons forming a network through synaptic connections may change strengths of synaptic connections through learning and have problem-solving capability. Here, the neural network model may include a plurality of layers, for example, an input layer, an output layer, and a plurality of hidden layers between the input layer and the output layer. Here, the neural network model may include an artificial neural network (ANN) model, a deep neural network (DNN) model, and the like.

In the present disclosure, a "home Internet of Things (IoT) service" may refer to an intelligent service based on information and communication technology, for connecting devices located in a home, and enabling information exchange and interaction between a person and a device and between devices. In this case, the home IoT service may provide a home automation function for automatically setting configurations of a plurality of devices located in a home without requiring a user to individually input settings.

In the present disclosure, a "large language model (hereinafter, LLM)" may refer to a language model including an artificial neural network including a large number of parameters. The LLM may be trained using self-supervised learning or semi-supervised learning based on a large amount of unlabeled corpus text. In this case, the LLM may not only have an ability for generating responses to user queries but also include a reasoning capability, as well as an ability for independently establishing and executing plans. Meanwhile, the large language model may be referred to by various terms such as a large-scale language model or an artificial intelligence (AI) chatbot model.

In the present disclosure, a "prompt" may refer to an input for initiating interaction with a large language model. The prompt may be a text input or a voice input including one or more texts and/or one or more sentences. In an embodiment, the prompt may include natural language text. The natural language text may include various information such as context, intent, task, and constraints that may be used by the large language model for generating a response to a user query or controlling a home Internet of Things (IoT) system. Meanwhile, the prompt may be referred to by various expressions representing the same or similar concept. For example, the prompt may be referred to as "input," "user input," "input phrase," "user command," "directive," "starting sentence," "task query," "trigger sentence," or "message," and is not limited to the above examples. Meanwhile, user speech initially input into an LLM 200 may also be a prompt. However, for convenience of description, the user speech initially input into the LLM 200 and a prompt generated based on additional information are distinguished and used.

Hereinafter, the present disclosure will be described in more detail with reference to the drawings.

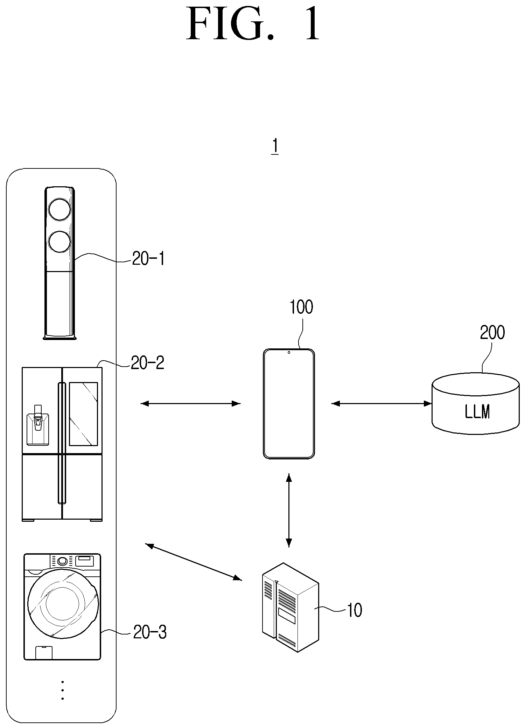

FIG. 1 is a diagram illustrating a home Internet of Things (IoT) system according to an embodiment of the present disclosure. As illustrated in FIG. 1, a home IoT system 1 may include an electronic apparatus 100, an LLM 200, a home IoT server 10, and a plurality of external devices 20-1, 20-2, 20-3, ... .

The electronic apparatus 100 may be a smartphone as illustrated in FIG. 1, which is merely an embodiment. The electronic apparatus 100 may include a personal computer, a terminal, a portable telephone, a handheld device, a wearable device, or the like, and is not limited thereto.

The home IoT server 10 may be a server for managing a plurality of external devices 20-1, 20-2, 20-3, ... included in the home IoT system 1. The home IoT server 10 may include: a communication module for communicating with another server, the plurality of external devices 20-1, 20-2, 20-3, ... or the electronic apparatus 100; at least one processor for processing data received from another server, the plurality of external devices 20-1, 20-2, 20-3, ... or the electronic apparatus 100; and at least one memory for storing a program for processing data or processed data. The home IoT server 10 may be implemented as various computing devices such as a workstation, a cloud, a data drive, and a data station. The home IoT server 10 may be implemented as one or more servers physically or logically distinguished based on functions, detailed configurations of functions, data, and the like, and may transmit and receive data through communication between the servers and process the transmitted and received data.

In particular, the home IoT server 10 (or may be referred to as a server, a home server, or the like) may perform functions including managing a user account, registering the plurality of external devices 20-1, 20-2, 20-3, ... in association with the user account, and managing or controlling the plurality of registered external devices 20-1, 20-2, 20-3, ... . For example, a user may access the home IoT server 10 through the electronic apparatus 100 and generate a user account. The user account may be identified based on an identifier (ID) and a password set by the user. The home IoT server 10 may register the plurality of external devices 20-1, 20-2, 20-3, ... in the user account according to a predetermined procedure. For example, the home IoT server 10 may connect identification information of the plurality of external devices 20-1, 20-2, 20-3, ... (e.g., a serial number or a MAC address) to the user account, and register, manage, and control the plurality of external devices 20-1, 20-2, 20-3, ... .

The plurality of external devices 20-1, 20-2, 20-3, ... may be at least one of various types of home appliances located in a home. For example, the plurality of external devices 20-1, 20-2, 20-3, ... may include the air conditioner 20-1, the refrigerator 20-2, the washing machine 20-3, and the like as illustrated in FIG. 1. However, the above-mentioned home appliances are merely examples. The plurality of external devices 20-1, 20-2, 20-3, ... may include at least one of a dishwasher, an electric range, an electric oven, an air conditioner, a clothing care machine, a dryer, and a microwave oven, and are not limited thereto. For example, the plurality of external devices 20-1, 20-2, 20-3, ... may include various types of home appliances such as a cleaning robot, a vacuum cleaner, and a television, which are not illustrated in the drawings. In addition, the above-mentioned home appliances are merely examples, and the plurality of external devices 20-1, 20-2, 20-3, ... may include various products located in a home (e.g., manual blinds, automatic windows, and automatic doors) in addition to the above-mentioned home appliances.

The LLM 200 may be a language model trained for generating a response to user speech based on text acquired through the user speech or generating a control command for controlling at least one external device located in a home.

In particular, the LLM 200 according to an embodiment of the present disclosure may perform a function of identifying whether an additional command is required based on user speech, and may perform a function of generating a control command for controlling at least one external device based on a generated prompt.

Specifically, the electronic apparatus 100 may receive user speech for controlling at least one external device among the plurality of external devices 20-1, 20-2, 20-3, ... . Here, the user speech may include a specific command for controlling at least one external device, such as "set the temperature of the house to 20 degrees," which is merely an embodiment, and the user speech may include an abstract command such as "make the home environment comfortable."

The electronic apparatus 100 may acquire text corresponding to the user speech, and may input (or transmit) the acquired text into the LLM 200. The LLM 200 may identify whether additional information for controlling an external device is required based on the acquired text.

When the additional information is identified as being required, the LLM 200 may request the additional information from the electronic apparatus 100. Here, the electronic apparatus 100 may acquire the additional information through at least one of a large language model, the Internet, and a user database. In addition, the electronic apparatus 100 may generate a prompt based on the acquired additional information. Here, the electronic apparatus 100 may generate the prompt using a prompt template.

The electronic apparatus 100 may input (or transmit) the generated prompt into the LLM 200. The LLM 200 may acquire a control command for controlling at least one external device based on the prompt.

The electronic apparatus 100 may transmit the control command acquired by the LLM 200 to the home IoT server 10 or at least one external device for performing a service corresponding to the user speech.

According to the embodiment described above, a user does not need to individually set driving conditions and operation contents for performing a home automation function, and may reduce the inconvenience of specifying driving conditions and operation contents for each of various external devices, as well as eliminating the need for an additional sensor by acquiring additional information through various sources.

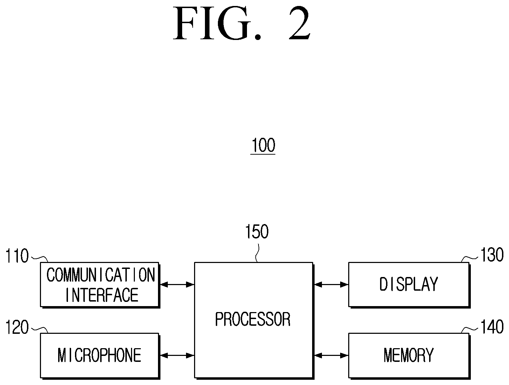

FIG. 2 is a block diagram illustrating a configuration of the electronic apparatus according to an embodiment of the present disclosure. As illustrated in FIG. 2, the electronic apparatus 100 may include a communication interface 110, a microphone 120, a display 130, a memory 140, and a processor 150. Meanwhile, the configuration illustrated in FIG. 2 is merely an embodiment, and other components may be added or some components may be omitted depending on the type of the electronic apparatus 100.

The communication interface 110 may include at least one circuit and may perform communication with various types of external devices. The communication interface 110 may include at least one of a Bluetooth Low Energy (BLE) module, a Wi-Fi communication module, a cellular communication module, a 3rd generation (3G) mobile communication module, a 4th generation (4G) mobile communication module, a 4th generation Long Term Evolution (LTE) communication module, and a 5th generation (5G) mobile communication module.

In particular, the communication interface 110 may perform communication with an external device 20 and the home IoT server 10 included in the home IoT system 1. Specifically, the communication interface 110 may receive, from the home IoT server 10, list information including the plurality of external devices 20-1, 20-2, 20-3, ... connected to the home IoT server 10. In addition, the communication interface 110 may receive, from the home IoT server 10, current state information of the plurality of external devices included in the list information. Here, the communication interface 110 may directly receive information about the external device 20 and current state information of the external device 20 from the external device 20.

The communication interface 110 may perform communication with the external LLM 200. For example, the communication interface 110 may transmit user speech (or text information corresponding to the user speech) to the LLM 200, and may receive, from the LLM 200, a signal for requesting additional information. The communication interface 110 may transmit the generated prompt to the LLM 200, and may receive at least one of a control command corresponding to the prompt and a response from the LLM 200.

The microphone 120 is a component for receiving audio generated from an object (e.g., a human voice or audio generated from an object) and converting the audio into audio data. The microphone 120 may receive audio in an activated state. The microphone 120 may include various components such as a microphone for collecting analog audio, an amplifier circuit for amplifying the collected audio, an analog-to-digital conversion (A/D conversion) circuit for sampling the amplified audio and converting the sampled audio into a digital signal, and a filter circuit for removing a noise component from the converted digital signal. In particular, the microphone 120 may receive user speech for controlling the external device 20.

The display 130 is a component for displaying image data, and may be implemented as a display including a self-emissive element or a display including a non-self-emissive element and a backlight. For example, the display 130 may be implemented as various types of displays such as a liquid crystal display (LCD), an organic light emitting diodes (OLED) display, a light emitting diodes (LED), a micro LED, a mini LED, a plasma display panel (PDP), a quantum dot (QD) display, and a quantum dot light-emitting diodes (QLED). The display 130 may also include a driving circuit, a backlight unit, and the like, which may be implemented in a form such as an amorphous silicon thin film transistor (a-Si TFT), a low temperature poly silicon (LTPS) TFT, and an organic TFT (OTFT). In addition, the display 130 may be implemented as a touch screen together with a touch sensor. In particular, the display 130 may output a message for guiding a user with information related to a control command acquired based on a prompt.

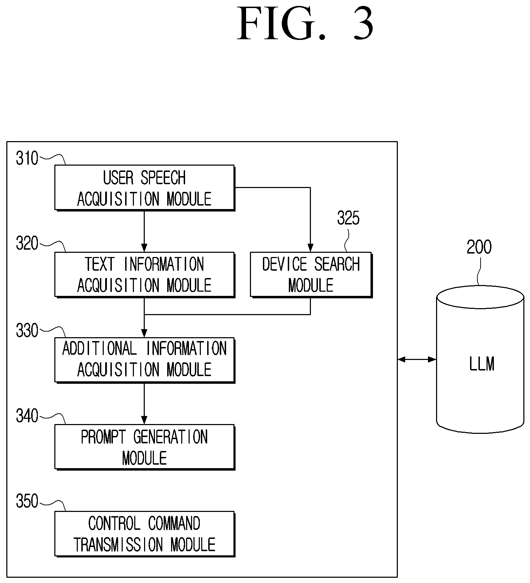

The memory 140 may store an operating system (OS) for controlling overall operations of components included in the electronic apparatus 100 and instructions or data related to the components of the electronic apparatus 100. In particular, the memory 140 may include, as illustrated in FIG. 3, a user speech acquisition module 310, a text information acquisition module 320, a device search module 325, an additional information acquisition module 330, a prompt generation module 340, and a control command transmission module 350 for performing a home automation function using the LLM 200. In particular, when the home automation function using the LLM 200 is executed, the electronic apparatus 100 may load data for various modules for performing the home automation function using the LLM 200 stored in a non-volatile memory into a volatile memory. Here, loading refers to an operation of loading and storing data stored in the non-volatile memory into the volatile memory, thereby allowing the processor 150 to access the data.

The memory 140 may store a user database including user history information. Here, the user history information may include at least one of information about a setting pattern of an external device, information about a preferred setting of an external device, and information about a recent setting of an external device. Meanwhile, the user database may be stored in the memory 140, which is merely an embodiment, and the user database may be stored externally (e.g., in the home IoT server 10).

Meanwhile, the LLM 200 may be stored in an external server, which is merely an embodiment, and the LLM 200 may be stored in the memory 140.

Meanwhile, the memory 140 may be implemented as a non-volatile memory (e.g., a hard disk, a solid state drive (SSD), or a flash memory), a volatile memory (which may also include a memory in the processor 150), or the like.

The processor 150 may control the electronic apparatus 100 according to at least one instruction stored in the memory 140.

In particular, the processor 150 may include a plurality of processors. Specifically, the plurality of processors may include one or more of a central processing unit (CPU), a graphics processing unit (GPU), an accelerated processing unit (APU), a many integrated core (MIC), a digital signal processor (DSP), a neural processing unit (NPU), a hardware accelerator, or a machine learning accelerator. One or more processors may control one or any combination of other components included in the electronic apparatus, and may perform an operation related to communication or data processing. One or more processors may execute one or more programs or instructions stored in the memory. For example, the plurality of processors may perform a method according to an embodiment of the present disclosure by executing one or more instructions stored in the memory.

When a method according to an embodiment of the present disclosure includes a plurality of operations, the plurality of operations may be performed by one processor or may be performed by a plurality of processors. That is, when a first operation, a second operation, and a third operation are performed by the method according to an embodiment, all of the first operation, the second operation, and the third operation may be performed by a first processor, or the first operation and the second operation may be performed by the first processor (for example, a generic-purpose processor), and the third operation may be performed by a second processor (for example, an artificial intelligence-dedicated processor). For example, an operation of acquiring additional information or an operation of generating a prompt may be performed by the first processor (e.g., a CPU), and an operation of identifying whether additional information is required through the LLM 200 or an operation of generating a control command may be performed by the second processor (e.g., a GPU or an NPU).

The processor 150 may be implemented as one or more multi-core processors including a plurality of cores (for example, homogeneous multi-core or heterogeneous multi-core). When the processor 150 is implemented as a multi-core processor, each of the plurality of cores included in the multi-core processor may include an internal memory of the processor, such as a cache memory and an on-chip memory, and a common cache shared by the plurality of cores may be included in the multi-core processor. In addition, each of the plurality of cores included in the multi-core processor (or some of the plurality of cores) may independently read and perform program instructions for implementing the method according to an embodiment of the present disclosure, or all (or some) of the plurality of cores may cooperate to read and perform program instructions for implementing the method according to an embodiment of the present disclosure.

When the method according to an embodiment of the present disclosure includes a plurality of operations, the plurality of operations may be performed by one core among a plurality of cores included in a multi-core processor or may be performed by a plurality of cores. For example, when a first operation, a second operation, and a third operation are performed by the method according to an embodiment, all of the first operation, the second operation, and the third operation may be performed by a first core included in the multi-core processor, or the first operation and the second operation may be performed by the first core included in the multi-core processor and the third operation may be performed by a second core included in the multi-core processor.

In embodiments of the present disclosure, the processor may refer to a system on chip (SoC) in which one or more processors and other electronic components are integrated, a single-core processor, a multi-core processor, or a core included in a single-core processor or a multi-core processor. Here, the core may be implemented as a CPU, a GPU, an APU, an MIC, a DSP, an NPU, a hardware accelerator, a machine learning accelerator, or the like. However, the embodiments of the present disclosure are not limited thereto.

Meanwhile, the processor 150 may acquire information about at least one external device related to user speech when the user speech for controlling an external device is input through the microphone 120. Here, the information about the external device may include at least one of identification information, location information, performance information, and current state information of the external devices 20-1, 20-2, 20-3, ... located in a home. The processor 150 may acquire additional information related to the user speech when it is determined that the additional information required for performing an operation related to the user speech exists by inputting information about the user speech into the LLM 200. Here, the additional information may be information required for generating a prompt for the external device 20 performing an operation related to the user speech. The processor 150 may acquire a prompt for controlling at least one external device based on the user speech and the additional information. The processor 150 may acquire a control command for controlling at least one external device by inputting the prompt into the LLM 200. The processor 150 may transmit the control command to at least one external device through the communication interface 110.

In an embodiment, when the user speech is input, the processor 150 may acquire list information including a plurality of external devices connected to the home IoT server 10 through the home IoT server 10 connected to the electronic apparatus 100. The processor 150 may acquire current state information of the plurality of external devices included in the list information. Here, the current state information of the external device may include at least one of power state information, configuration state information, and location state information of the external device.

In an embodiment, the processor 150 may acquire a prompt for controlling at least one external device based on current state information of at least one external device among the plurality of external devices, the user speech, and the additional information.

In an embodiment, the processor 150 may acquire a prompt template for generating a prompt. Here, the prompt template may be a template stored in the memory 140 or the home IoT device 10 for generating a prompt, and may include a general command for executing various user commands when combined with additional information. For example, the prompt template may include a general command stating "set (device operation) for executing a user command in (additional information)." The processor 150 may acquire the prompt by inserting information about the user speech and the additional information into the prompt template.

In an embodiment, the processor 150 may acquire the additional information through at least one of a large language model, the Internet, and a user database when it is determined that additional information required for performing an operation related to the user speech exists by inputting information about the user speech into the LLM 200. Here, the additional information may include at least one of common sense information acquired through the LLM 200, external environment information related to the user speech searched through the Internet, and user history information related to the user speech searched through the user database.

In an embodiment, the processor 150 may map a control command acquired through the LLM 200 onto an application programming interface (API) related to a home IoT service and call the API.

In an embodiment, the processor 150 may output a message for guiding a user with information related to the control command.

FIG. 3 is a block diagram illustrating components included in the electronic apparatus for performing the home automation function according to an embodiment of the present disclosure. As illustrated in FIG. 3, the electronic apparatus 100 may include the user speech acquisition module 310, the text information acquisition module 320, the device search module 325, the additional information acquisition module 330, the prompt generation module 340, and the control command transmission module 350. Here, some components may be omitted or some components may be added according to embodiments.

The user speech acquisition module 310 may be a module for acquiring user speech through the microphone 120. Here, the user speech may be user speech for controlling an external device in the home IoT system 1. In particular, the user speech may not include a specific command for specifically specifying a configuration of the external device, and may include an abstract command such as "make the inside of the house a comfortable environment" and "make an environment good for watching a movie."

In an embodiment, the user speech acquisition module 310 may receive, from an external device, user speech acquired through a microphone of the external device connected to the electronic apparatus 100. Meanwhile, receiving the user speech is described in the above-described embodiment, which is merely an embodiment, and the user speech acquisition module 310 may receive user input in a text form from a user. In this case, when the user input in the text form is received, the text information acquisition module 320 may be omitted.

The text information acquisition module 320 may convert the user speech into text information. Specifically, the text information acquisition module 320 may acquire text information corresponding to the user speech by inputting the user speech into a speech-to-text (STT) module. In addition, the text information acquisition module 320 may transmit the user speech to a server for converting the user speech into text, and may acquire text information corresponding to the user speech from the server. The text information acquisition module 320 may transmit (or input) the text information corresponding to the user speech to the LLM 200.

Meanwhile, in the above-described embodiment, the electronic apparatus 100 directly acquiring text information corresponding to the user speech is described, which is merely an embodiment, and the electronic apparatus 100 may directly transmit (or input) the user speech to the LLM 200, and the user speech may be converted into text in the LLM 200.

The device search module 325 may search for at least one external device related to the user speech, and may acquire information about the searched at least one external device. Specifically, the device search module 325 may acquire list information about the plurality of external devices 20-1, 20-2, 20-3, ... in the home IoT system 1 from the home IoT device 10. Here, the list information may include information about external devices located in each space in a home. In addition, the device search module 325 may acquire not only the list information but also current state information of the plurality of external devices 20-1, 20-2, 20-3, ... . The device search module 325 may transmit (input) the information about the external device to the LLM 200.

The LLM 200 may determine whether the additional information required for performing an operation related to the user speech exists based on text information corresponding to the user speech and information about the external device. Here, the LLM 200 may be trained for determining whether additional information is required based on the text information corresponding to the user speech and the information about the external device.

In an embodiment, when user speech (or text information) including an abstract command is input, the LLM 200 may determine that additional information required for performing an operation related to the user speech exists. When user speech including a specific command is input, the LLM 200 may determine that additional information required for performing an operation related to the user speech is not required, and may thus acquire a control command for performing the operation related to the user speech.

When it is determined that the additional information is required, the LLM 200 may request, from the electronic apparatus 100, a prompt newly generated based on the additional information.

The additional information acquisition module 330 may acquire additional information for generating a prompt. Here, the additional information acquisition module 330 may acquire the additional information through at least one of an LLM, the Internet, and a user database.

In an embodiment, the additional information acquisition module 330 may acquire common sense information through the LLM 200. For example, when user speech stating "make a comfortable environment" is acquired, the additional information acquisition module 300 may transmit a query about "comfortable environment" to the LLM 200, and may acquire common sense information about "comfortable environment" through the LLM 200. That is, the additional information acquisition module 300 may acquire information about "temperature 23 to 25 degrees, humidity 40 to 60%," and the like, as the common sense information about "comfortable environment."

In an embodiment, the additional information acquisition module 330 may acquire external environment information related to the user speech searched through the Internet. For example, when user speech stating "make a comfortable environment" is acquired, the additional information acquisition module 300 may acquire current weather information about a region in which the home IoT system 1 is installed through the Internet.

In an embodiment, the additional information acquisition module 330 may acquire user history information related to the user speech searched through a user database. For example, when user speech stating "make a comfortable environment" is acquired, the additional information acquisition module 300 may acquire, through the user database, information about an indoor environment preferred by a user, information about an external device recently set by the user, and the like.

The additional information acquisition module 330 may repeatedly perform an operation of acquiring additional information for generating a prompt. That is, until a prompt is generated, that is, until it is determined that additional information is not required, the additional information acquisition module 330 may access at least one of the LLM 200, the Internet, and a user database and acquire additional information.

The prompt generation module 340 may generate a prompt based on at least one of current state information of at least one external device related to the user speech, user speech (text information), and the acquired additional information.

In an embodiment, the prompt generation module 340 may generate a prompt based on a prompt template. That is, when a plurality of types of prompt templates are stored, the prompt generation module 340 may search for a prompt template for controlling at least one external device related to the user speech. For example, when it is determined that at least one external device related to the user speech is an air conditioner, the prompt generation module 340 may acquire a prompt template related to the air conditioner among a plurality of pre-stored types of prompt templates. In addition, the prompt generation module 340 may acquire a prompt by applying at least one of current state information of the external device, text information corresponding to the user speech, and additional information to the acquired prompt template related to the air conditioner.

In an embodiment, the prompt generation module 340 may acquire a prompt by inputting at least one of current state information of the external device, user speech (text information), and the acquired additional information into a prompt generation model trained for generating a prompt. Here, the prompt generation model may be a neural network model trained for generating a prompt for controlling the external device by inputting at least one of current state information of the external device, user speech (text information), and the acquired additional information.

Here, the prompt generation module 340 may acquire at least one prompt corresponding to each of at least one external device. For example, the prompt generation module 340 may generate a first prompt corresponding to an air conditioner and a second prompt corresponding to a humidifier, respectively, which is merely an embodiment, and the prompt generation module 340 may generate one prompt for controlling at least one external device.

The prompt generation module 340 may acquire a control command corresponding to the prompt by inputting the generated prompt into the LLM 200. That is, the LLM 200 may acquire the control command corresponding to the prompt.

The control command transmission module 350 may transmit the control command acquired by the LLM 200 to at least one external device. Here, the control command transmission module 350 may map the control command acquired by the LLM 200 to an application programming interface (API) related to a home IoT service and call the API.

In addition, the control command transmission module 350 may output a message for guiding a user with information related to the control command. That is, the control command transmission module 350 may output a message including information related to the control command through the display 130, and may output a message including information related to the control command through a speaker.

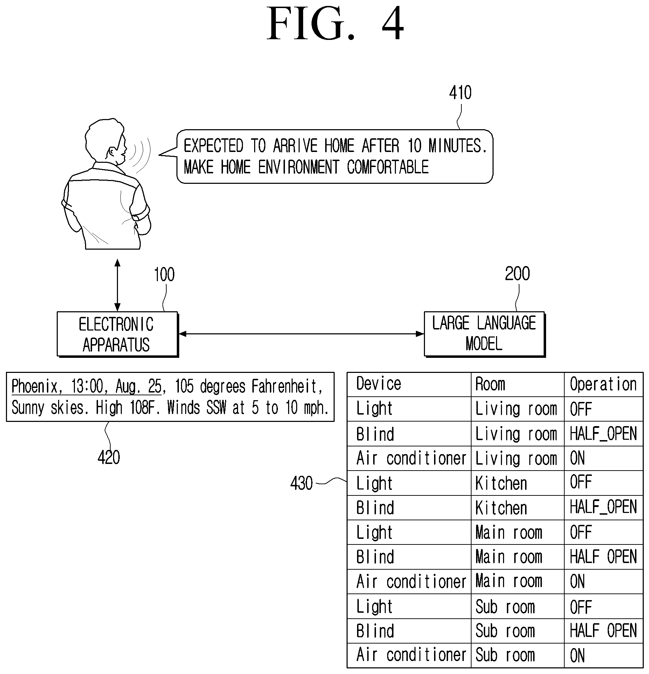

FIG. 4 is a diagram illustrating a method for performing a home automation function related to weather according to an embodiment of the present disclosure.

As illustrated in FIG. 4, a user may utter user speech 410 stating "expected to arrive home after 10 minutes. Make a comfortable home environment."

The electronic apparatus 100 may convert the user speech 410 into text information. In addition, the electronic apparatus 100 may search for information about an external device. For example, the electronic apparatus 100 may search for information about an external device related to temperature, humidity, lighting, and the like (e.g., an air conditioner, a window, a door, a humidifier, a blind, or a lamp).

The electronic apparatus 100 may transmit text information corresponding to the user speech 410 to the large language model 200. Here, the large language model 200 may not generate a control command based only on the user speech 410, and the large language model 200 may thus request additional information from the electronic apparatus 100.

The electronic apparatus 100 may acquire additional information 420 through the Internet in response to a request for the additional information. Here, the additional information 420 may be weather information about a region in which the home IoT system 1 is located, and, for example, as illustrated in FIG. 4, the electronic apparatus 100 may acquire the additional information 420 such as "Phoenix, 13:00, Aug. 25, 105 degree Fahrenheit, Sunny skies, High 108F. Winds SSW at 5 to 10 mph." In another embodiment, the electronic apparatus 100 may acquire common sense information about a comfortable environment from the large language model 200, and may acquire user history information related to an external device related to temperature, humidity, lighting, and the like through a user database.

The electronic apparatus 100 may generate a prompt using the text information corresponding to the user speech 410 and the additional information 420. In particular, the electronic apparatus 100 may generate the prompt by applying the text information corresponding to the user speech 410 and the additional information 420 to a prompt template.

In addition, the electronic apparatus 100 may input the generated prompt into the large language model 200, and the large language model 200 may acquire a control command 430 as illustrated in FIG. 4. Here, the control command 430 may include control commands (e.g., information about turning on/off and configuration information) for a plurality of external devices located in each space in a home, as illustrated in FIG. 4.

The electronic apparatus 100 may transmit the acquired control command to a corresponding external device, thereby allowing an operation related to the user speech to be performed.

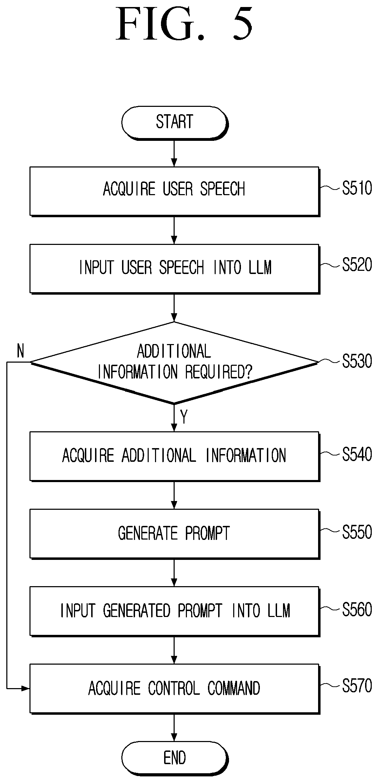

FIG. 5 is a flowchart illustrating a control method for an electronic apparatus according to an embodiment of the present disclosure.

The electronic apparatus 100 may acquire user speech (S510). Specifically, the electronic apparatus 100 may acquire user speech through a microphone 120 of the electronic apparatus 100 or a microphone of an external device.

The electronic apparatus 100 may input the user speech into the LLM 200(S520). Here, the electronic apparatus 100 may directly input the user speech into the LLM 200, which is merely an embodiment, and the electronic apparatus 100 may acquire text information corresponding to the user speech and input the acquired text information into the LLM 200.

The LLM 200 may identify whether additional information is required (S530). Specifically, the LLM 200 may identify whether a control command is generatable based on the user speech, and may identify that additional information is required when the control command is not generatable.

When it is identified that the additional information is not required (S530-N), the electronic apparatus 100 may acquire a control command through the LLM 200 (S570).

When it is identified that the additional information is required (S530-Y), the electronic apparatus 100 may acquire the additional information (S540). The electronic apparatus 100 may acquire the additional information through at least one of the LLM 200, the Internet, and a user database. Specifically, the additional information may include at least one of common sense information acquired through the LLM 200, external environment information related to the user speech searched through the Internet, and user history information related to the user speech searched through the user database.

The electronic apparatus 100 may generate a prompt (S550). Specifically, the electronic apparatus 100 may generate a prompt for controlling an external device related to the user speech based on information about the user speech and the additional information. In an embodiment, the electronic apparatus 100 may acquire a prompt template for generating a prompt, and may acquire the prompt by inserting the information about the user speech and the additional information into the prompt template.

The electronic apparatus 100 may input the generated prompt into the LLM 200 (S560), and the electronic apparatus 100 may acquire a control command through the LLM 200 (S570). In addition, the electronic apparatus 100 may transmit the acquired control command to at least one external device for performing an operation related to the user speech.

Meanwhile, in an embodiment, when the user speech is input, the electronic apparatus 100 may acquire list information including a plurality of external devices connected to the home IoT server 10 through the home IoT server 10 connected to the electronic apparatus 100. In addition, the electronic apparatus 100 may acquire current state information of the plurality of external devices included in the list information.

In an embodiment, the electronic apparatus 100 may acquire a prompt for controlling at least one external device based on current state information of at least one external device among the plurality of external devices, the user speech, and the additional information.

In an embodiment, the electronic apparatus 100 may map a control command acquired through the LLM 200 onto an application programming interface (API) related to a home IoT service and call the API.

In an embodiment, the electronic apparatus 100 may output a message for guiding a user with information related to the control command.

According to the embodiment described above, a user does not need to individually set driving conditions and operation contents of an external device for performing a home automation function, and additional information may be acquired from various sources, thereby eliminating the need for an additional sensor.

Functions related to artificial intelligence according to the present disclosure may be operated by a processor and a memory of the electronic apparatus 100.

The processor may include one or more processors. Here, the processor may include at least one of a central processing unit (CPU), a graphics processing unit (GPU), and a neural processing unit (NPU), and is not limited thereto.

The CPU is a generic-purpose processor capable of performing not only general operations but also artificial intelligence operations, and may efficiently execute a complex program through a multi-level cache structure. The CPU may be advantageous in a serial processing method that enables organic linkage between a previous calculation result and a next calculation result through sequential calculations. The generic-purpose processor is not limited to the above-described examples except for a case in which the generic-purpose processor is specified as a central processing unit (CPU).

The GPU is a processor for performing large-scale operations such as floating point operations used in graphic processing, and may perform large-scale operations in parallel by integrating a large number of cores. In particular, the GPU may be advantageous in a parallel processing method such as convolution operations compared to the CPU. In addition, the GPU may be used as a co-processor for supplementing a function of the CPU. The processor for large-scale operations is not limited to the above-described examples except for a case in which the processor is specified as a graphic processing unit (GPU).

The NPU is a processor specialized for artificial intelligence operations using an artificial neural network, and may implement each layer included in the artificial neural network as hardware (e.g., silicon). The NPU may be designed according to a requirement of a manufacturer, and may thus have lower flexibility than the CPU or the GPU, and may efficiently process artificial intelligence operations required by the manufacturer. In addition, the processor specialized for artificial intelligence operations may be implemented in various forms such as a tensor processing unit (TPU), an intelligence processing unit (IPU), or a vision processing unit (VPU). The artificial intelligence processor is not limited to the above-described examples except for a case in which the artificial intelligence processor is specified as a neural processing unit (NPU).

In addition, one or more processors may be implemented as a system on chip (SoC). In this case, the SoC may further include, in addition to one or more processors, a memory and a network interface such as a bus for data communication between the processor and the memory.

When a plurality of processors are included in the SoC included in the electronic apparatus, the electronic apparatus may perform operations related to artificial intelligence by using some of the plurality of processors (for example, operations related to learning or inference of an artificial intelligence model). For example, the electronic apparatus may perform operations related to artificial intelligence by using at least one of a GPU, an NPU, a VPU, a TPU, or a hardware accelerator specialized for artificial intelligence operations such as convolution operations and matrix multiplication operations among the plurality of processors. However, the above-described example is merely an embodiment, and the electronic apparatus may process operations related to artificial intelligence by using a generic-purpose processor such as a CPU.

In addition, the electronic apparatus may perform operations related to functions related to artificial intelligence by using multi-core included in one processor (for example, a dual core or a quad core). In particular, the electronic apparatus may perform artificial intelligence operations such as convolution operations and matrix multiplication operations in parallel by using multi-core included in the processor.

One or more processors may control processing of input data according to predefined operation rules or an artificial intelligence model stored in the memory. The predefined operation rules or the artificial intelligence model may be generated through learning.

Here, generation through learning indicates that predefined operation rules or an artificial intelligence model having desired characteristics are generated by applying a learning algorithm to a plurality of training data. Such learning may be performed in a device itself performing artificial intelligence according to the present disclosure or may be performed through a separate server or system.

The artificial intelligence model may include a plurality of neural network layers. At least one layer may have at least one weight value and perform an operation of the layer through an operation result of a previous layer and at least one defined operation. Examples of a neural network may include a convolutional neural network (CNN), a deep neural network (DNN), a recurrent neural network (RNN), a restricted Boltzmann machine (RBM), a deep belief network (DBN), a bidirectional recurrent deep neural network (BRDNN), a deep Q-network, and a transformer, and the neural network in the present disclosure is not limited to the above-described examples unless explicitly stated.

A learning algorithm is a method for training a predetermined target device (e.g., a robot) by using a plurality of training data to allow the predetermined target device to make a decision or perform prediction on its own. Examples of the learning algorithm may include supervised learning, unsupervised learning, semi-supervised learning, and reinforcement learning, and the learning algorithm in the present disclosure is not limited to the above-described examples unless explicitly stated.

Meanwhile, the methods according to the various embodiments of the present disclosure may be provided by being included in a computer program product. The computer program product may be traded between a seller and a purchaser as a commodity. The computer program product may be distributed in the form of a machine-readable storage medium (e.g., a compact disc read only memory (CD-ROM)), or may be distributed online (e.g., download or upload) through an application store (e.g., Play Store^{™}) or directly between two user devices (e.g., smartphones). In case of online distribution, at least a portion of the computer program product (e.g., a downloadable app) may be at least temporarily stored or temporarily generated in a machine-readable storage medium such as the memory of a server of a manufacturer, a server of an application store, or a relay server.

The methods according to the various embodiments of the present disclosure may be implemented as software including instructions stored in a machine-readable storage medium readable by a machine (e.g., a computer). The machine may include an electronic apparatus (e.g., a TV) according to the disclosed embodiments as a device capable of calling stored instructions from the storage medium and performing operations according to the called instructions.

Meanwhile, the machine-readable storage medium may be provided in the form of a non-transitory storage medium. Here, the term "non-transitory storage medium" only indicates that the storage medium is a tangible device and does not include a signal (e.g., an electromagnetic wave), and the term does not distinguish between a case in which data is semi-permanently stored in the storage medium and a case in which data is temporarily stored in the storage medium. For example, the "non-transitory storage medium" may include a buffer in which data is temporarily stored.

When the instructions are executed by a processor, the processor may directly perform functions corresponding to the instructions or may perform the functions corresponding to the instructions by using other components under control of the processor. The instructions may include code generated or executed by a compiler or an interpreter.

Although the embodiments of the present disclosure have been illustrated and described above, the present disclosure is not limited to the specific embodiments described above, and various modifications may be made by those skilled in the art without departing from the scope of the present disclosure as defined in the claims, and these modifications should not be individually understood apart from the spirit or scope of the present disclosure.

## Claims

1. An electronic apparatus comprising:
a communication interface;
a microphone;
a memory for storing at least one instruction; and
a processor connected to the communication interface, the microphone, and the memory and configured to control the electronic apparatus,
wherein, by executing the at least one instruction, the processor is configured to:
acquire information about at least one external device related to user speech when the user speech for controlling the external device is input through the microphone;
acquire additional information related to the user speech when it is determined that the additional information required for performing an operation related to the user speech exists by inputting information about the user speech into a large language model;
acquire a prompt for controlling the at least one external device based on the user speech and the additional information;
acquire a control command for controlling the at least one external device by inputting the prompt into the large language model; and
transmit the control command to the at least one external device through the communication interface.

2. The apparatus as claimed in claim 1, wherein the processor is configured to:
when the user speech is input, acquire list information including a plurality of external devices connected to a home Internet of Things (IoT) server through the home IoT server connected to the electronic apparatus; and
acquire current state information of the plurality of external devices included in the list information.

3. The apparatus as claimed in claim 2, wherein the processor is configured to:
acquire a prompt for controlling the at least one external device based on current state information of the at least one external device among the plurality of external devices, the user speech, and the additional information.

4. The apparatus as claimed in claim 1, wherein the processor is configured to:
acquire a prompt template for generating the prompt; and
acquire the prompt by inserting the information about the user speech and the additional information into the prompt template.

5. The apparatus as claimed in claim 1, wherein the processor is configured to:
acquire the additional information through at least one of the large language model, the Internet, and a user database when it is determined that the additional information required for performing an operation related to the user speech exists by inputting the information about the user speech into the large language model.

6. The apparatus as claimed in claim 4, wherein the additional information includes at least one of common sense information acquired through the large language model, external environment information related to the user speech searched through the Internet, and user history information related to the user speech searched through a user database.

7. The apparatus as claimed in claim 1, wherein the processor is configured to:
map the control command acquired through the large language model onto an application programming interface (API) related to a home IoT service and call the API.

8. The apparatus as claimed in claim 1, wherein the processor is configured to:
output a message guiding a user with information related to the control command.

9. A control method for an electronic apparatus, the method comprising:
acquiring information about at least one external device related to user speech when the user speech for controlling the external device is input;
acquiring additional information related to the user speech when it is determined that the additional information required for performing an operation related to the user speech exists by inputting information about the user speech into a large language model;
acquiring a prompt for controlling the at least one external device based on the user speech and the additional information;
acquiring a control command for controlling the at least one external device by inputting the prompt into the large language model; and
transmitting the control command to the at least one external device.

10. The method as claimed in claim 9, wherein the acquiring of the information about the at least one external device includes:
when the user speech is input, acquiring list information including a plurality of external devices connected to a home Internet of Things (IoT) server through the home IoT server connected to the electronic apparatus; and
acquiring current state information of the plurality of external devices included in the list information.

11. The method as claimed in claim 10, wherein the acquiring of the prompt includes:
acquiring a prompt for controlling the at least one external device based on current state information of the at least one external device among the plurality of external devices, the user speech, and the additional information.

12. The method as claimed in claim 9, wherein the acquiring of the prompt includes:
acquiring a prompt template for generating the prompt; and
acquiring the prompt by inserting the information about the user speech and the additional information into the prompt template.

13. The method as claimed in claim 9, wherein the acquiring of the additional information includes:
acquiring the additional information through at least one of the large language model, the Internet, and a user database when it is determined that the additional information required for performing an operation related to the user speech exists by inputting the information about the user speech into the large language model.

14. The method as claimed in claim 13, wherein the additional information includes at least one of common sense information acquired through the large language model, external environment information related to the user speech searched through the Internet, and user history information related to the user speech searched through the user database.

15. The method as claimed in claim 9, further comprising:
mapping the control command acquired through the large language model onto an application programming interface (API) related to a home IoT service and calling the API.
